(19) Europäisches Patentamt
European Patent Office
Office européen des brevets

(11) **EP 4 214 478 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **21763308.0**

(22) Anmeldetag: **16.08.2021**

(51) Internationale Patentklassifikation (IPC):
*G01F 23/284* (2006.01)    *G01S 13/88* (2006.01)
*H01Q 1/22* (2006.01)    *G01S 7/03* (2006.01)
*G01S 13/00* (2006.01)    *G01S 13/34* (2006.01)
*G01S 13/42* (2006.01)    *H01Q 21/28* (2006.01)

(52) Gemeinsame Patentklassifikation (CPC):
**G01F 23/284; G01S 7/03; G01S 13/003;
G01S 13/343; G01S 13/345; G01S 13/42;
G01S 13/88; H01Q 1/225;** H01Q 21/28

(86) Internationale Anmeldenummer:
**PCT/EP2021/072677**

(87) Internationale Veröffentlichungsnummer:
**WO 2022/058102 (24.03.2022 Gazette 2022/12)**

(54) **WINKELAUFLÖSENDES FÜLLSTANDSMESSGERÄT**

ANGLE-RESOLVING LEVEL MEASURING DEVICE

APPAREIL DE MESURE DE NIVEAU À RÉSOLUTION D'ANGLE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **17.09.2020 DE 102020124300**

(43) Veröffentlichungstag der Anmeldung:
**26.07.2023 Patentblatt 2023/30**

(73) Patentinhaber: **Endress+Hauser SE+Co. KG
79689 Maulburg (DE)**

(72) Erfinder:
• **HÜGLER, Philipp
73431 Aalen (DE)**
• **MAYER, Winfried
89290 Buch (DE)**

(74) Vertreter: **Büker, Florian
Endress + Hauser Group Services
(Deutschland) AG+Co. KG
Colmarer Straße 6
79576 Weil am Rhein (DE)**

(56) Entgegenhaltungen:
EP-A1- 3 309 523     EP-A1- 3 309 899
EP-A1- 3 467 450     WO-A1-2018/108359
DE-A1- 102016 102 241    DE-A1- 102018 112 819
DE-A1- 102018 207 686

**Beschreibung**

Die Erfindung betrifft eine Antennen-Anordnung für ein Füllstandsmessgerät, das zur Bestimmung eines Füllstands-Profils über einen definierten Raumwinkelbereich dient, sowie ein Verfahren zum Betrieb des Messgerätes.

In der Prozessautomatisierungstechnik werden zur Erfassung relevanter Prozessparameter entsprechende Feldgeräte eingesetzt. Zwecks Erfassung der jeweiligen Prozessparameter sind in den entsprechenden Feldgeräten daher geeignete Messprinzipien implementiert, um als Prozessparameter, etwa einen Füllstand, einen Durchfluss, einen Druck, eine Temperatur, einen pH-Wert, ein Redoxpotential oder eine Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich berührungslose Messverfahren etabliert, da sie robust und wartungsarm sind. Dabei werden unter dem Begriff *"Behälter"* im Rahmen der Erfindung auch nicht-abgeschlossene Behältnisse, wie beispielsweise Becken, Seen oder fließende Gewässer verstanden. Ein weiterer Vorteil berührungsloser Messverfahren besteht in der Fähigkeit, den Füllstand quasi kontinuierlich messen zu können. Im Bereich der kontinuierlichen Füllstandsmessung werden daher vorwiegend Radar-basierte Messverfahren eingesetzt (im Kontext dieser Patentanmeldung bezieht sich der Begriff "Radar" auf Signale bzw. elektromagnetische Wellen mit Frequenzen zwischen 0.03 GHz und 300 GHz).

Ein etabliertes Messverfahren bildet hierbei FMCW (*"Frequency Modulated Continuous Wave"*). Das zugrundeliegende Messprinzip beruht darauf, ein kontinuierliches Radar-Signal mit einer modulierten Frequenz auszusenden. Kennzeichnend für FMCW ist hierbei, dass die Sende-Frequenz periodisch innerhalb eines definierten Frequenzbandes geändert wird. Unter Berücksichtigung der regulatorischen Vorschriften kommen mit fortschreitender Entwicklung verbreitet höhere Frequenzbänder im Bereich einer standarisierten Mittenfrequenz zum Einsatz: Neben dem 6 GHz-Band, dem 26 GHz-Band oder dem 79 GHz-Band sind mittlerweile Frequenz von über 100 GHz implementiert. Vorteilhaft an hohen Frequenzen ist, dass bei höheren Frequenzen eine größere absolute Bandbreite (bspw. 4 GHz beim 100 GHz-Frequenzband) genutzt werden kann. Dadurch wird wiederum eine höhere Auflösung bzw. eine höhere Genauigkeit der Füllstandsmessung erreicht.

Die zeitliche Änderung der Frequenz innerhalb des Frequenzbandes ist standardmäßig linear und weist eine Sägezahn- beziehungsweise Dreiecks-Form auf. Auch eine Sinusförmige Änderung kann prinzipiell implementiert sein. Die Entfernung bzw. der Füllstand wird beim FMCW-Verfahren auf Basis der momentanen Frequenzdifferenz zwischen dem aktuell empfangenen Radar-Signal nach Reflektion am Messobjekt, und dem momentan vom Messgerät ausgesendeten Radar-Signal bestimmt. Beschrieben wird das FMCWbasierte Füllstands-Messverfahren beispielsweise in der Offenlegungsschrift DE 10 2013 108 490 A1.

Mittels des FMCW-Verfahrens ist es möglich, die Entfernung bzw. den Füllstand zumindest punktuell zu messen. Dabei richtet sich der Punkt, an dem der Füllstand gemessen wird, nach der Ausrichtung der Sende- /Empfangs-Antenne bzw. nach der Richtung ihrer Strahlkeule (aufgrund der allgemein reziproken Eigenschaften von Antennen ist die Charakteristik bzw. der Strahlwinkel der Strahlkeule der jeweiligen Antenne unabhängig davon, ob sie sendet oder empfängt; bei dem Begriff "Winkel" oder "Strahlwinkel" handelt es sich im Rahmen der vorliegenden Patentanmeldung um denjenigen Winkel, unter dem die Strahlkeule ihre maximale Sende-Intensität bzw. Empfangs-Empfindlichkeit aufweist).

Im Falle von flüssigen Füllgütern, deren Füllstand homogen ist, ist eine punktuelle Füllstandsmessung ausreichend. In diesen Fällen ist das Füllstandsmessgerät so ausgerichtet, dass die Strahlkeule der Antenne in etwa senkrecht nach unten gen Füllgut gerichtet ist und die Entfernung zum Füllgut bestimmt. Bei feststoffartigen Füllgütern wie Kies oder Getreide kann der Füllstand beispielsweise aufgrund von Schüttgutkegeln jedoch inhomogen sein, so dass der vom Füllstandsmessgerät ermittelte Füllstandswert nur bedingt aussagekräftig ist. Speziell in solchen Fällen ist es daher erstrebenswert, die Entfernung bzw. den Füllstand in Form eines zwei- oder dreidimensionalen Profils bestimmen zu können.

Ein Füllstandsmessgerät, mittels dem ein zwei- bzw. dreidimensionales Füllstandsprofil bestimmbar ist, wird in der europäischen Veröffentlichungsschrift EP 3309899 A1 gezeigt. Hierbei kommt eine Antennen-Anordnung zum Einsatz, die auf einer Array-förmigen Anordnung von Einzel-Antennen auf einem entsprechenden Substrat basiert.

Um die Entfernung bzw. den Füllstand in Form eines zwei- oder dreidimensionalen Profils bestimmen zu können, muss das Füllstandsmessgerät ausgelegt sein, eingehende Radar-Signale einem zugehörigen Raumwinkel zuordnen zu können. Erreicht werden kann dies beispielsweise mittels des MIMO-Prinzips (*"Multiple Input Multiple Output"*). Diesem Prinzip liegt eine Antennen-Anordnung zugrunde, die aus einer Vielzahl an Sende- und Empfangs-Antennen besteht. Dabei sendet jede Sende-Antenne ein zu den anderen Sende-Antennen orthogonales Radar-Signal aus, welches von jeder Empfangsantenne empfangen und ggf. digitalisiert, um anschließend einer gemeinsamen Radarsignalverarbeitung unterzogen zu werden. Aus einer Antennen-Anordnung mit N Sende-Antennen und K Empfangs-Antennen entsteht dadurch rechnerisch eine virtuelle Antennen-Anordnung von K*N Antennen mit einer stark vergrößerten virtuellen Apertur. Die entsprechende Auswertungs-Einheit muss in der Lage sein, die über die K Empfangs-Antennen jeweils empfangenen Radar-Signale zu digitalisieren bzw. signaltechnisch zu verarbeiten und über die Orthogonalität der Sendesignale entsprechend K*N Messkurven zu erstellen. Hierdurch erhöhen MIMO-basierte Radarsysteme gegenüber Systemen ohne virtuell vergrößerte Apertur das räumliche Auflösungsvermögen und erreichen eine wesentlich verbesserte Immunität gegenüber Störungen.

Sofern alle Sende- und Empfangsantennen in etwa am gleichen Ort bzw. einem gemeinsamen Substrat angeordnet sind, so dass sie denselben Raumwinkelbereich abdecken, wird dies als *"Colocated MIMO"* bezeichnet. In einer möglichen Ausführungsform hiervon sind die Sende-Antennen entlang einer Spalte angeordnet, während die Empfangs-Antennen innerhalb der Antennen-Anordnung entlang einer Reihe angeordnet sind. Die Sende- und Empfangs-Antennen sind also jeweils in einem definierten Abstand entlang einer Geraden angeordnet, wobei die Geraden in etwa rechtwinklig zueinander verlaufen und somit ein Raster mit K*N Punkten aufspannen, welches die Orte der virtuellen Antennen repräsentiert. Um die resultierenden Messkurven den einzelnen Punkten, bzw. den einzelnen Antennen zuordnen zu können, sind verschiedene Techniken zur Ansteuerung der Sende-Antennen bzw. zur Auswertung der Empfangs-Antennen bekannt. Diesbezüglich wird bevorzugt *"TDMA (Time Division Multiple Access)"* implementiert, wonach die Sende-Antennen gemäß des Zeitmultiplex-Verfahren entlang ihrer Anordnung nacheinander aktiv geschaltet werden. Ein MIMO-Radarsensor für Kraftfahrzeuge mit Array-förmiger Antennen-Anordnung ist beispielsweise in der deutschen Veröffentlichungsschrift DE 102018207686 A1 gezeigt.

Nach dem Stand der Technik kann die gesamte, zur Umsetzung des MIMO-Prinzips erforderliche Hardware bereits so kompakt integriert werden, dass die Sende- und Empfangs-Antennen als Patch-Antennen zusammen mit demjenigen Halbleiterbauteil, das die Signalerzeugungs-Einheit und die Auswertungs-Einheit umfasst, auf einer gemeinsamen Leiterplatte bzw. sogar als gemeinsam gekapselter IC (*"Integrated Circuit"*) untergebracht sind. Näher beschrieben werden MIMO-basierte Radar-Systeme beispielsweise in *"MIMO Radar Signal Processing"* (Jian Li), 2009.

Voraussetzung für eine eindeutige, Raumwinkel-abhängige Füllstandsmessung ist, dass die einzelnen Sende- und Empfangs-Antennen innerhalb der Antennen-Anordnung bzw. entlang der Geraden in einem Abstand, der gleich oder kleiner als die Hälfte der Wellenlänge des Radar-Signals ist, aufgereiht sind. Andernfalls entstehen neben der Hauptabstrahlkeule so genannte *"Grating Lobes":* Dies sind Sekundär-Strahlkeulen, die im Gegensatz zu Nebenkeulen eine Strahlintensität gleich der Intensität der primären Strahlkeule aufweisen. Sofern also die Sende- oder Empfangs-Antennen weiter als die Hälfte der Wellenlänge des Radar-Signals voneinander beabstandet sind, ist der Winkel, unter dem ein etwaiges Objekt ein Radar-Echosignal hervorruft, aufgrund der Grating Lobes innerhalb des Raumwinkelbereichs nicht mehr eindeutig zuordenbar.

Für den Fall, dass wiederum die Anzahl an Sende- und Empfangs-Antennen bspw. aufgrund einer begrenzten Anzahl an Auswertungs-Kanälen der Auswertungs-Einheit limitiert ist, kann bei enger Anordnung der Antennen, also wenn der Antennen-Abstand kleiner als die Hälfte der Wellenlänge beträgt, je nach Weite des gewünschten Raumwinkelbereichs keine ausreichende Winkeltrennung erzielt werden.

Es ist dementsprechend eine Aufgabe der Erfindung, ein Füllstandsmessgerät bereitzustellen, mit welchem auch bei wenig zur Verfügung stehenden Auswertungs-Kanälen über einen großen Raumwinkelwinkelbereich ein Füllstands-Profil mit hoher Winkeltrennung erfasst werden kann.

Die Erfindung löst diese Aufgabe durch ein Radar-basiertes Füllstandsmessgerät, das zur Bestimmung eines Füllstands-Profils eines Füllguts über einen definierten Raumwinkelbereich dient und eine entsprechende Antennen-Anordnung aufweist. Hierzu umfasst die Antennen-Anordnung ein Haupt-Antennenarray mit zumindest zwei entlang einer ersten Geraden angeordneten Sende-Antennen, mittels welcher ein Radar-Signal mit definierter Wellenlänge gemäß des MIMO-Prinzips in Richtung des Füllguts aussendbar ist. Dabei sind die Sende-Antennen des Haupt-Antennenarrays in einem definierten ersten Abstand, der größer als die Hälfte der Wellenlänge des Radar-Signals ist, zueinander angeordnet. Neben den Sende-Antennen weist das Haupt-Antennenarray zumindest zwei entlang einer zweiten Geraden angeordnete Empfangs-Antennen auf, mittels welcher das von der Füllgut-Oberfläche reflektierte Radar-Signal empfangbar ist. Hierbei sind die Empfangs-Antennen in einem zweiten definierten Abstand, der wiederum größer als die Hälfte der Wellenlänge des Radar-Signals ist, zueinander angeordnet. Außerdem ist die zweite Gerade derart in einem definierten Winkel von insbesondere 90 ° zur ersten Geraden angeordnet, so dass die Sende-Antennen und die Empfangs-Antennen ein entsprechendes Raster bilden.

Durch die Abstände der Sende- und Empfangs-Antennen im Haupt-Antennenarray, die jeweils größer als die Hälfte der Wellenlänge des Radar-Signals sind, kann das Haupt-Antennenarray mit einer geringen Anzahl an Sende- und Empfangs-Antennen über einen großen Raumwinkelbereich von maximal 180° bzw. $2*\pi$ zwar eine hohe Winkeltrennung bewirken, jedoch ist mittels des Haupt-Antennenarrays in dem definierten Raumwinkelbereich nicht zwangsweise jeder Raumwinkel eindeutig zuordbar. Erfindungsgemäß umfasst die Antennen-Anordnung daher neben dem Haupt-Antennenarray zudem ein Sub-Antennenarray mit zumindest zwei eigenständigen Sende- oder Empfangs-Antennen, die wiederum ausgelegt sind, das Radar-Signal auszusenden bzw. nach Reflektion an der Füllgut-Oberfläche zu empfangen.

Die mindestens zwei eigenständigen Empfangs- bzw. Sende-Antennen des Sub-Antennenarrays sind in Bezug zum Raster des Haupt-Antennenarrays derart auf einem Zwischenraster angeordnet und dem Sub-Antennenarray ist zumindest eine Sende-Antenne (bzw. Empfangs-Antenne, sofern das Sub-Antennenarray als eigenständige Antennen zwei oder mehrere Sende-Antennen aufweist) derart zugeordnet, so dass mittels des Sub-Antennenarrays in dem definierten Raumwinkelbereich jeder Raumwinkel eindeutig zuordbar ist.

Bei der zumindest einen zugeordneten Antenne des Sub-Antennenarrays kann es sich um eine der Sende-bzw. Empfangs-Antennen des Haupt-Antennenarrays handeln. Alternativ oder zusätzlich hierzu kann das Sub-Antennen-Array als zugeordnete Antenne zumindest eine separate, auf dem Zwischenraster angeordnete Sende- bzw. Empfangs-Antenne umfassen.

Durch die erfindungsgemäße Auslegung der Antennen-Anordnung mit zwei Antennenarrays können gemäß des MIMO-Prinzips mittels des Haupt- und Sub-Antennenarrays jeweils separat entsprechende Messkurven aufgenommen und hieraus separate Raumwinkel-Spektren für jedes der beiden Antennenarrays erstellt werden. Dadurch wird erfindungsgemäß ermöglicht, dass die korrespondierenden Raumwinkel-Spektren des Haupt-Antennenarrays und des Sub-Antennenarrays zu konjugierten Raumwinkel-Spektren zusammengefasst werden, um anhand der konjugierten Raumwinkel-Spektren ein Raumwinkel-abhängiges Füllstands-Profil zu erstellen. Vorteilhaft hieran ist, dass die konjugierten Raumwinkel-Spektren dank des Haupt-Antennenarrays über den gesamten Raumwinkelbereich von bis zu je 180° eine hohe Winkeltrennung aufweisen und dank des Sub-Antennenarrays gleichzeitig jeder Raumwinkel innerhalb des konjugierten Raumwinkelspektrums eindeutig zugeordnet werden kann. Im Vergleich zu einer Antennen-Anordnung, die gemäß des Stand der Technik lediglich aus einem Antennenarray besteht, dessen Antennen im Abstand kleiner oder gleich $\lambda/2$ angeordnet sind, lässt sich mittels der erfindungsgemäßen Antennen-Anordnung der gleiche Raumwinkelbereich und die gleiche Winkeltrennung mit einer deutlich reduzierten Anzahl an Antennen bzw. Auswertungs-Kanälen realisieren.

Die Auslegung der Sende- und Empfangs-Antennen des Haupt-Antennenarrays und des Sub-Antennenarrays sind im Rahmen der Erfindung nicht fest vorgegeben. Sie können sowohl planar ausgelegt sein, beispielsweise als Patch-Antennen auf einem entsprechenden Substrat. Sie können beispielsweise jedoch auch als Hohlleiter-Antennen ausgelegt sein.

Konkret kann das Raster des Haupt-Antennenarrays, also der jeweilige Abstand zwischen den Sende-Antennen und der jeweilige Abstand zwischen den Empfangs-Antennen im Rahmen der Erfindung beispielsweise so bemessen werden, dass der erste Abstand und der zweite Abstand jeweils der Wellenlänge des Radar-Signals entsprechen. In diesem Fall hat der Versatz der eigenständigen Sende- bzw. Empfangs-Antennen des Sub-Antennenarray der Hälfte der Wellenlänge des Radar-Signals zu betragen, damit die eigenständigen Sende- bzw. Empfangs-Antennen des Sub-Antennenarrays in Bezug zum Raster des Haupt-Antennenarrays auf dem entsprechenden Zwischenraster angeordnet sind.

Um einen symmetrischen Raumwinkelbereich abbilden zu können, ist das Haupt-Antennenarray vorzugsweise so auszulegen, dass es eine gleiche Anzahl an Sende-Antennen und Empfangs-Antennen aufweist. Hinsichtlich der Anzahl eigenständiger Sende-bzw. Empfangs-Antennen des Sub-Antennen reicht es je nach Anzahl an Antennen im Haupt-Antennenarray aus, wenn das Sub-Antennenarray im Vergleich zum Haupt-Antennenarray maximal die Hälfte, insbesondere lediglich ein Drittel der Sende-bzw. Empfangs-Antennen aufweist, so dass auch die Gesamt-Anzahl an Antennen beider Antennenarrays in Grenzen gehalten werden kann. Hierdurch kann die erfindungsgemäße Antennen-Anordnung auch durch solche Auswertungs-Einheiten ausgewertet werden, die zur Auswertung der Antennen nur eine begrenzte Anzahl an Kanälen gleichzeitig bereitstellen kann.

Auf Basis der Antennen-Anordnung kann erfindungsgemäß ein Radar-basiertes Füllstandsmessgerät realisiert werden, mittels dem über einen weiten Raumwinkelbereich ein Füllstands-Profil einer Füllgut-Oberfläche mit hoher Winkeltrennung bestimmt werden kann. Zusätzlich zur Antennen-Anordnung gemäß einer der zuvor beschriebenen Ausführungsvarianten umfasst das Füllstandsmessgerät hierzu entsprechend folgende Komponenten:

- Eine Signalerzeugungs-Einheit, die ausgelegt ist, ein Radar-Signal mit einer definierten Wellenlänge zu erzeugen und gemäß des MIMO-Prinzips (also entweder einzeln kodiert oder auf Basis von TDMA pro nachfolgender Sende-Antenne nacheinander) in die Sende-Antennen des Haupt-Antennenarrays und des Sub-Antennenarrays einzukoppeln, und
- eine Auswertungs-Einheit, die ausgelegt ist, um

    ◦ anhand der am Haupt-Antennenarray empfangenen Radar-Signale gemäß des MIMO-Prinzips entsprechende Messkurven aufzunehmen,
    ◦ um anhand der am Sub-Antennenarray empfangenen Radar-Signals gemäß des MIMO-Prinzips entsprechende Messkurven aufzunehmen,
    ◦ um anhand der mittels des Haupt-Antennenarrays aufgenommenen Messkurven auf Höhe definierter Messpunkte des Messbereichs entsprechende Raumwinkel-Spektren zu erstellen,
    ◦ um anhand der mittels des Sub-Antennenarrays aufgenommenen Messkurven auf der Höhe der definierten Messpunkte des Messbereichs entsprechende Raumwinkel-Spektren zu erstellen,
    ◦ um die bezüglich der Messpunkte korrespondierenden Raumwinkel-Spektren des Haupt-Antennenarrays und des Sub-Antennenarrays zu konjugierten Raumwinkel-Spektren zusammenzufassen, und

    ◦ um anhand der konjugierten Raumwinkel-Spektren das Raumwinkel-abhängige Füllstands-Profil zu erstellen.

Dabei wird unter dem Begriff *"Einheit"* im Rahmen der Erfindung prinzipiell jede elektronische Schaltung verstanden, die für den angedachten Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung, wie ein FPGA oder ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Messgerätes im Sinne der Erfindung potenziell auch auf einen gemeinsamen physikalischen Speicher zurückgreifen bzw. mittels derselben physikalischen Digitalschaltung betrieben werden.

Im Rahmen der Erfindung ist es nicht fest vorgeschrieben, welches grundsätzliche Radar-Verfahren zur Erstellung der einzelnen Messkurven implementiert sein muss. Prinzipiell können beispielsweise das FMCW- oder das Pulslaufzeit-Verfahren herangezogen werden. Im Falle des FMCW-Verfahrens ist die Signalerzeugungs-Einheit des Füllstandsmessgerätes so auszulegen, dass sie das Radar-Signal gemäß des FMCW-Verfahrens mit einer entsprechenden Frequenzrampe erzeugen kann. Die Auswertungs-Einheit ist bei FMCW entsprechend so zu konzipieren, dass die Messkurven des Haupt-Antennenarrays und des Sub-Antennenarrays gemäß des FMCW-Verfahrens durch Fourier-Transformation des empfangenen Radar-Signals erstellt werden. Im Falle von FMCW kann die Auswertungs-Einheit die Fourier-transformierten Messkurven des Haupt-Antennenarrays und des Sub-Antennenarrays außerdem vorzugsweise mittels einer Fensterfunktion, insbesondere mittels eines Hann-Fensters oder Chebychev-Fensters, gewichten, um Störechos vom Rand des Messbereichs zu unterdrücken.

Korrespondierend zum erfindungsgemäßen Füllstandsmessgerät wird die Aufgabe, die der Erfindung zugrunde liegt, außerdem durch ein entsprechendes Verfahren zum Betrieb des Füllstandsmessgerätes gelöst. Demnach umfasst das Verfahren folgende Verfahrensschritte:

- Aufnahme entsprechender Messkurven über einen definierten Füllstands-Messbereich mittels des Haupt-Antennenarrays gemäß des MIMO-Prinzips,
- Erstellung von Raumwinkel-Spektren auf Höhe mehrerer definierter Messpunkte des Messbereichs anhand der mittels des Haupt-Antennenarrays aufgenommenen Messkurven,
- Aufnahme entsprechender Messkurven über einen definierten Füllstands-Messbereich mittels des Sub-Antennenarrays gemäß des MIMO-Prinzips,
- Erstellung von Raumwinkel-Spektren auf Höhe der definierten Messpunkte des Messbereichs anhand der mittels des Sub-Antennenarrays aufgenommenen Messkurven,
- Zusammenfassen der an den Messpunkten korrespondierenden Raumwinkel-Spektren des Haupt-Antennenarrays und des Sub-Antennenarrays zu konjugierten Raumwinkel-Spektren, und
- Erstellung des Raumwinkel-abhängigen Füllstands-Profils anhand der konjugierten Raumwinkel-Spektren.

Sofern die Raumwinkel-Spektren jeweils logarithmisch skaliert sind, sind die an den Messpunkten korrespondierenden Raumwinkel-Spektren des Haupt-Antennenarrays und des Sub-Arrays mittels Addition zusammenzufassen. Wenn die Raumwinkel-Spektren jeweils linear skaliert sind, müssen die an den Messpunkten korrespondierenden Raumwinkel-Spektren des Hauptantennenarrays und des Sub-Antennenarrays mittels Multiplikation zusammengefasst werden. Erstellt werden können die Raumwinkel-Spektren auf Basis jeglicher digitalen Strahlformungs-Methode (*"Digital Beamforming"*).

Anhand der nachfolgenden Figuren wird die Erfindung näher erläutert. Es zeigt:

    Fig. 1: ein Radar-basiertes Füllstandsmessgerät an einem Behälter,

    Fig. 2: eine schematische Visualisierung des erfassten Füllstandes in Abhängigkeit der Raumwinkel innerhalb des Behälters,

    Fig.3: einen schematischen Aufbau der Antennen-Anordnung des erfindungsgemäßen Füllstandsmessgerätes, und

    Fig. 4: das erfindungsgemäße Verfahren zur Bestimmung des raumwinkelabhängigen Füllstands mittels der Antennen-Anordnung.

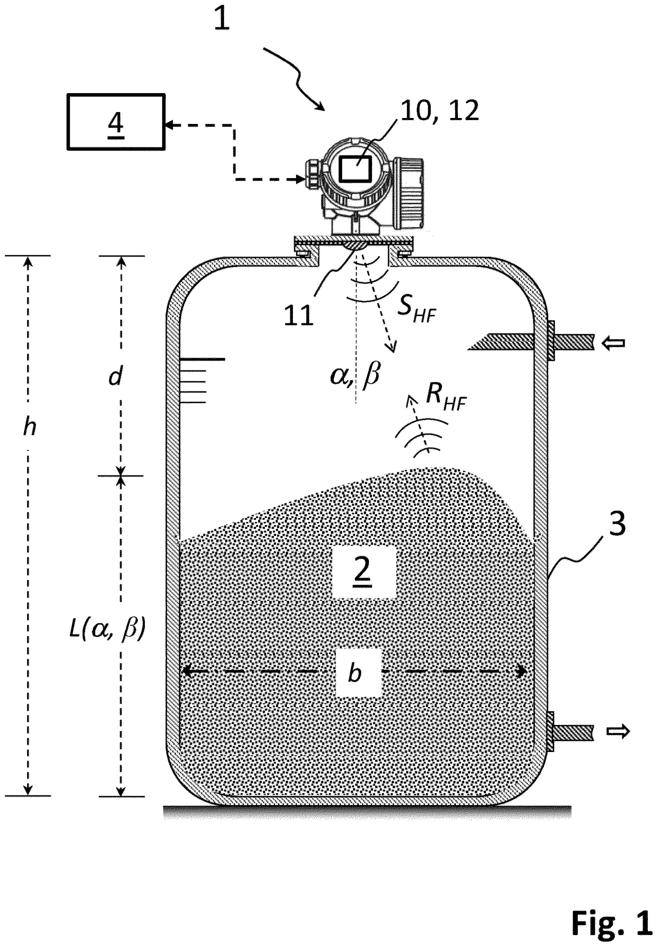

Zum Verständnis der Erfindung ist in Fig. 1 ein Behälter 3 mit einem Füllgut 2 gezeigt, dessen Füllstand L in Form eines dreidimensionalen Füllstands-Profils $L(a, \beta)$ zu erfassen ist. Hierzu ist das Füllstandsmessgerät 1 in einer bekannten Einbauhöhe h oberhalb des Füllgutes 2 am Behälter 3 angebracht. Dabei kann der Behälter 3 je nach Art und Einsatzgebiet bis zu mehr als 100 m hoch sein. Das Füllstandsmessgerät 1 ist so am Behälter 3 ausgerichtet und befestigt, dass es über eine Antennen-Anordnung 11 kontinuierlich, zyklisch oder auch azyklisch ein Radar-Signal $S_{HF}$ mit entsprechender Wellenlänge λ in Richtung der Oberfläche des Füllgutes 2 aussendet. Nach Reflektion des Radar-Signals $S_{HF}$ an der Füllgut-Oberfläche empfängt das Füllstandsmessgerät 1 das reflektierte Radar-Signal $R_{HF}$ über die Antennen-Anordnung 11 in Abhängigkeit des Abstandes d zwischen Füllstandsmessgerät 1 und Füllgut-Oberfläche gemäß

$$d = h - L$$

In der Regel ist das Füllstandsmessgerät 1 über eine Schnittstelle, etwa "PROFIBUS", "HART" oder "Wireless HART" mit einer übergeordneten Einheit 4, wie z. B. einem Prozessleitsystem, verbunden. Hierüber kann der Füllstand L übermittelt werden, beispielsweise um gegebenenfalls Zu- oder Abflüsse des Behälters 3 zu steuern. Es können aber auch anderweitige Informationen über den allgemeinen Betriebszustand des Füllstandsmessgerätes 1 kommuniziert werden.

Nach dem Stand der Technik ist es mittels entsprechender Radar-Verfahren wie FMCW- oder dem Pulslaufzeit-Verfahren bereits möglich, den Füllstand L bei Idealbedingungen (gut reflektierendem Füllgut 2, planarer Füllgut-Oberfläche, keine Hindernisse wie Rührwerke oder sonstige Einbauten im Signalpfad des Radar-Signals $S_{HF}$) punktuell mit einer Genauigkeit im Sub-Mikrometer-Bereich aufzulösen. Selbst bei rauen bzw. welligen Füllgut-Oberflächen oder staubhaltiger Atmosphäre ist mittels dem FMCW-Verfahren eine zuverlässige Messung des Füllstandes L an einem Punkt der Füllgut-Oberfläche möglich.

Allerdings stößt die punktuelle Messung des Füllstandes L an seine Grenzen, wenn die Oberfläche des Füllgutes 2, wie in Fig. 1 dargestellt, nicht planar ist. Dies kann insbesondere bei Schüttgut-artigen Füllgütern 2 eintreten, bspw. wenn sich beim Befüllen des Behälters 3 Schüttkegel bilden. Daneben kann es beim Abpumpen des Füllgutes 2 zu Vertiefungstrichtern an der Füllgut-Oberfläche kommen. Sofern das Füllstandsmessgerät 1 den Füllstand L lediglich punktuell an einer Stelle der Oberfläche des Füllgutes 2 bestimmen würde, könnte dies zu einer fehlerhaften Interpretation des Füllstandes L führen. So könnte zum Beispiel ein Entleerungsvorgang gestoppt werden, wenn durch das Füllstandsmessgerät 1 ein leerer Behälter 3 ermittelt wurde, obwohl am Rand des Behälter-Inneren nach wie vor Füllgut 2 vorhanden ist. Im entgegengesetzten Fall könnte es bei vollem Behälter 3 vorkommen, dass ein Befüll-Vorgang nicht angehalten wird, obwohl ein Maximalfüllstand an einer Stelle der Füllgut-Oberfläche bereits überschritten ist, da dies durch das Füllstandsmessgerät 1 nicht erkannt wird.

Aus diesem Grund ist das erfindungsgemäße Füllstandsmessgerät 1, wie in Fig. 1 angedeutet ist, in der Lage, den Füllstand L innerhalb eines definierten Raumwinkelbereichs $[\alpha; \beta]$ in Form eines dreidimensionalen Füllstands-Profils L(a, β) zu bestimmen. Dabei beziehen sich die senkrecht zueinander verlaufenden Winkel α, β des Raumwinkelbereichs $[\alpha; \beta]$ jeweils auf das Lot. Dementsprechend wird das Füllstands-Profil L(a, β) in Bezug zu einem Polar-Koordinatensystem erstellt. Zur Erstellung eines dreidimensionalen Füllstands-Profils L(x, y) im kartesischen Koordinaten-System kann der jeweilige Winkel α, β (da dieser wie auch die jeweils gemessene Entfernung d(a, (3) bekannt ist) mittels der Sinusfunktion zu einem korrespondierenden lateralen Wert x, y der in Bezug zum Behälterquerschnitt steht, umgerechnet werden. Es erfolgt also eine entsprechende Umwandlung von einem Polar-Koordinatensystem in ein kartesisches Koordinatensystem.

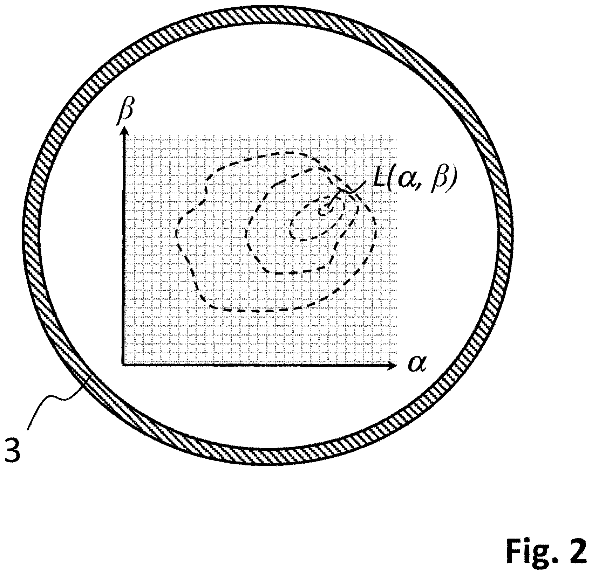

Schematisch ist ein aus der Perspektive des Füllstandsmessgerätes 1 ermitteltes Füllstands-Profil L(a, β) in Fig. 2 dargestellt. Dabei ist das Füllstands-Profil L(a, β) in Bezug zur Wand des Behälters 3 in Form von Höhenlinien visualisiert. Je nach Auslegung kann das Füllstandsmessgerät 1 das Füllstands-Profil L(a, β) also beispielsweise jeweils aktuell auf einem Display als topographische Karte mit entsprechenden Höhenlinien darstellen. Unabhängig von einer etwaigen Visualisierung des Füllstands-Profils L(a, β) besteht dieses im Rahmen der Erfindung aus einer Daten-Matrix, in denen der Füllstandswert L in Abhängigkeit der zwei Raumwinkel α, β abgespeichert ist. Die Größe der Daten-Matrix ergibt sich entsprechend aus der Winkeltrennung und der Weite des Raumwinkelbereichs.

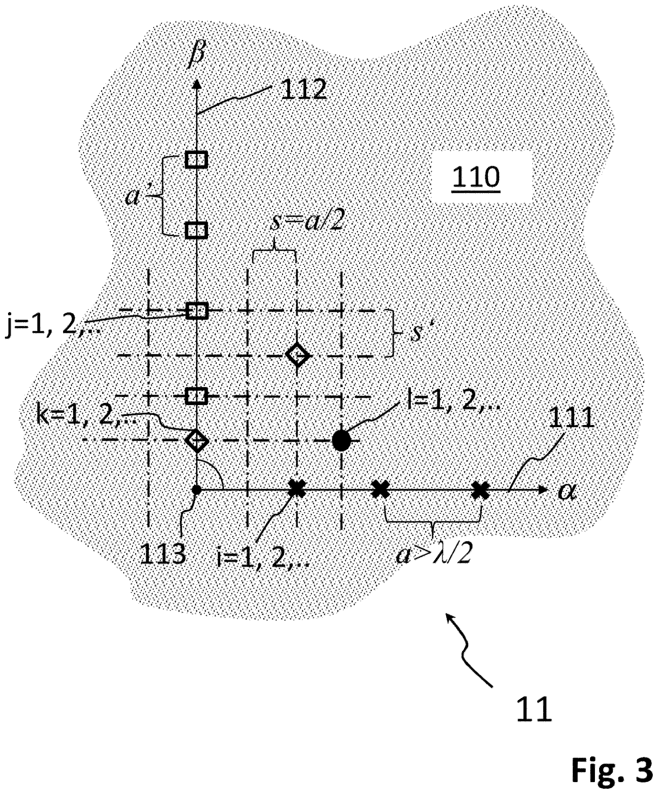

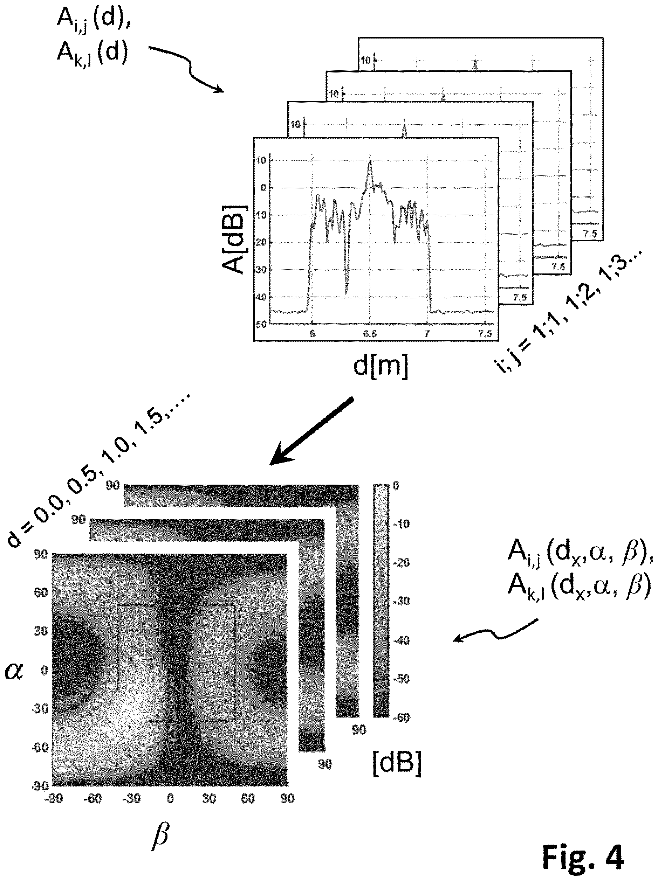

Der erfindungsgemäße Aufbau und die erfindungsgemäße Funktionsweise des Füllstandsmessgerätes 1, mittels dem ein Füllstands-Profil L(α, β) mit hoher Winkeltreue erstellt werden kann, wird anhand von Fig. 3 und Fig. 4 näher erläutert:
Fig. 3 zeigt eine erfindungsgemäße Antennen-Anordnung 11 des Füllstandsmessgerätes 1 in einer vereinfachten Form. Die Antennen-Anordnung 11 basiert auf einem Haupt-Antennenarray sowie zusätzlich einem Sub-Antennenarray, wobei die beiden Antennenarrays auf einem gemeinsamen Substrat 110 angeordnet sind. Somit decken das Haupt-Antennenarray und das Sub-Antennenarray in etwa denselben Raumwinkelbereich $[\alpha; \beta]$ ab. Damit der Raumwinkelbereich $[\alpha; \beta]$ das Füllgut 2 abdeckt, ist die gesamte Antennen-Anordnung 11 im eingebauten Zustand des Füllstandsmessgerätes 1 derart ausgerichtet, dass der Normalenvektor des Substrates 110 und somit die Hauptabstrahlkeulen der Antennen i, j, k, l ungefähr horizontal gen Füllgut 2 zeigt.

In Fig. 3 umfasst das Haupt-Antennenarray zur vereinfachten Anschauung lediglich drei Sende-Antennen i, die jeweils in einem definierten, ersten Abstand a > λ/2 entlang einer ersten Geraden 111 angeordnet sind. Dabei dienen die Sende-Antennen i des Haupt-Antennenarrays dazu, das Radar-Signal $S_{HF}$ in Richtung des Füllguts 2 auszusenden. Angesteuert werden die Sende-Antennen i des Haupt-Antennenarrays von einer Signalerzeugungs-Einheit 10 des Füllstandsmessgerätes 1. Sofern als Radar-Verfahren FMCW implementiert ist, werden die Sende-Antennen i derart angesteuert, dass sie das Radar-Signal $S_{HF}$ gemäß

$$f = c * \lambda^{-1}$$

mit der für FMCW charakteristischen, sägezahnförmig modulierten Frequenz f aussenden. Die Signalerzeugungs-Einheit 10 kann dazu beispielsweise auf einem phasengesteuerten Regelkreis (auch bekannt als PLL, *"Phase Locked Loop"*) basieren. Zur Umsetzung des MIMO-Prinzips muss die Signalerzeugungs-Einheit 10 das Radar-Signal $S_{HF}$ den Sende-Antennen i des Haupt-Antennenarrays zudem entsprechend codiert oder gemäß des TDMA-Prinzips der Anordnungsreihenfolge i = 1, 2, .... nach zeitlich versetzt zuführen.

Zum Empfang des reflektierten Radar-Signals $R_{HF}$ nach Reflektion an der Füllgut-Oberfläche umfasst das Haupt-Antennenarray bei der in Fig. 3 vereinfachten Darstellung vier Empfangs-Antennen j, die wiederum auf einer zweiten Geraden 112 angeordnet sind. Dabei sind die erste Gerade 111 und die zweite Gerade 112 in einem Winkel von 90° zueinander angeordnet und entspringen demselben Ursprung 114. Auch die Empfangs-Antennen j des Haupt-Antennenarrays sind auf der zweiten Geraden 112 gleichmäßig in einem zweiten definierten Abstand a' zueinander angeordnet, wobei der zweite Abstand a' wiederum größer als die Hälfte der Wellenlänge λ des Radar-Signals $S_{HF}$ ist. Bei einer Frequenz f des Radar-Signals $S_{HF}$, $R_{HF}$ von 100 GHz entsprechen die Abstände a, a' zwischen den benachbarten Sende-Antennen i bzw. den benachbarten Empfangs-Antennen j gemäß

$$c = \lambda * f$$

in etwa 1,5 mm (c ist hierbei die Lichtgeschwindigkeit in Vakuum).

Durch die rechtwinklige Anordnung der zwei Geraden 111, 112 bilden die drei Sende-Antennen i und die vier Empfangs-Antennen j des Haupt-Antennenarrays im exemplarischen Beispiel von Fig. 3 ein Raster [a; a'] mit 3*4= 12 Rasterpunkten aus, wobei die Rasterpunkte gemäß des MIMO-Prinzips die virtuelle Apertur des Haupt-Antennenarrays widerspiegeln. In der Praxis kann das Haupt-Antennenarray beispielsweise jeweils 24 Sende-Antennen i und 24 Empfangs-Antennen j umfassen, so dass das Haupt-Antennenarray zur Auswertung 24*24 Kanäle aufweist. In diesem Zusammenhang sei erwähnt, dass nicht nur bei einem Winkel der zwei Geraden 111, 112 von 90° zueinander ein entsprechendes Raster ausgebildet wird, sondern theoretisch bei jedem Winkel kleiner als 180°. Dementsprechend ist der Winkel zwischen den zwei Geraden 111, 112 im Rahmen der Erfindung nicht zwangsweise auf 90° festgelegt, sondern kann in der Praxis auch zwischen 30° und 150° betragen. Allerdings ist der resultierende Raumwinkelbereich [α; β] des Haupt-Antennenarrays in diesem Fall nicht automatisch symmetrisch.

Dadurch, dass der Abstand a, a' der Sende-Antennen i bzw. der Empfangs-Antennen j im Haupt-Antennenarray erfindungsgemäß größer als die Hälfte der Wellenlänge λ des Radar-Signals $S_{HF}$ ist, kann mittels des Haupt-Antennenarrays auch mit wenigen Sende- und Empfangs-Antennen i, j über den gesamten Winkelbereich eine hohe Winkeltrennung der gemessenen Entfernungs- bzw. Füllstandswerte erreicht werden. Dabei ist jedoch nicht jeder Raumwinkel α, β innerhalb des Raumwinkelbereich [α; β] eindeutig zuordbar. Dies wird erfindungsgemäß mittels des Sub-Antennenarrays überwunden, da mittels diesem im gesamten Raumwinkelbereich [α; β] jeder Raumwinkel α, β eindeutig zuordbar ist. Hierfür umfasst das Sub-Antennenarray bei der vereinfachten Ausführungsvariante in Fig. 3 zwei eigenständige Empfangs-Antennen k. In Bezug Zum Raster [a; a'] des Haupt-Antennenarrays sind die Empfangs-Antennen k des Sub-Antennenarrays auf einem Zwischenraster [s; s'] angeordnet. Dabei definiert sich als Zwischenraster [s; s'] im Rahmen der Erfindung jeder Ort auf dem Substrat,

- der in Richtung der ersten Gerade 111 um den Versatz s

$$s = (\pm \frac{a}{2})$$

oder ein ganzzahliges Vielfaches hiervon von einer der Sende-Antennen i oder einer der Empfangsantennen j des Haupt-Antennenarrays verschoben ist, und/oder

- jeder Ort, der in Richtung der zweiten Gerade 112 wiederum um den Versatz s'

$$s' = (\pm \frac{a'}{2})$$

oder ein ganzzahliges Vielfaches hiervon von einer der Empfangs-Antennen j oder einer der Sende-Antennen i des Haupt-Antennenarrays verschoben ist.

Wie in Eq. 4.21 von *"Array and Phased Array Antenna Basics"* (Hubregt J. Visser, 2005) beschrieben ist, muss der Versatz s, s' zwischen den Zwischenrasterplätzen [s; s'] außerdem gemäß folgender Formel

$$s, s' \leq \frac{\lambda}{\left| \sin\left(\frac{[\alpha; \beta]}{2}\right) \right|}$$

dimensioniert sein, damit das Sub-Antennenarray keine Grating Lobes ausbildet und dementsprechend mittels des Sub-Antennenarrays in dem definierten Raumwinkelbereich [α; β] jeder Raumwinkel α, β eindeutig zuordbar ist. Diese Formel und die erfindungsgemäß geforderte Positionierung der Empfangs-Antennen k des Sub-Antennenarrays wird beispielsweise erfüllt, wenn der Abstand a zwischen den Sende-Antennen i und der Abstand a' zwischen den Empfangs-Antennen j im Haupt-Antennenarray der Wellenlänge λ des Radar-Signals $S_{HF}$ entspricht, und wenn der Versatz s, s' der Sende- bzw. Empfangs-Antennen k, l im Sub-Antennenarray die Hälfte der Wellenlänge λ des Radar-Signals $S_{HF}$ entspricht.

Bei der in Fig. 3 gezeigten Ausführungsvariante der erfindungsgemäßen Antennen-Anordnung 11 umfasst das Sub-Antennenarray neben den zwei Empfangs-Antennen k eine eigenständige Sende-Antenne l, die analog zu den Empfangs-Antennen k wiederum auf dem Zwischenraster [s; s'] angeordnet ist. Alternativ oder zusätzlich zu einer oder mehreren eigenständigen Sende-Antennen l ist es im Sinne der Erfindung auch denkbar, dass dem Sub-Antennenarray eine oder mehrere ausgewählte Sende-Antennen i und/oder Empfangs-Antennen j des Haupt-Antennenarrays zugeordnet werden. Dabei sind auch diese aus dem Haupt-Antennenarray zugeordneten Antennen i, j wiederum unter Berücksichtigung der Zwischenrasterplätze [s; s'] der reinen Empfangs- und Sende-Antennen k, l des Sub-Antennenarrays derart auszuwählen bzw. zu positionieren, dass mittels des Sub-Antennenarrays in dem definierten Raumwinkelbereich [α; β] jeder Raumwinkel α, β eindeutig zuordbar ist. Diesbezüglich finden bzw. optimieren lässt sich die entsprechende Anzahl und Position der Antennen i, j, k, l des Sub-Antennenarrays mittels entsprechender Simulation des sich aus den Antennen i, j, k, l des Sub-Antennenarrays ergebenden Gruppenfaktors des Sub-Antennenarrays, beispielsweise auf Basis von MatLab.

Da die geforderte Winkeltrennung des Sub-Antennenarrays nicht so hoch, wie die Winkeltrennung des Haupt-Antennenarrays sein muss, reicht es im Rahmen der Erfindung aus, wenn das Sub-Antennenarray unabhängig von der in Fig. 3 gezeigten Ausführungsvariante lediglich ein Drittel der Anzahl an Antennen des Haupt-Antennenarrays aufweist. Hierdurch kann das Füllstands-Profil L(α, β) erfindungsgemäß mit einer insgesamt niedrigen Anzahl an Antennen i, j, k, l und dementsprechend geringem Rechenaufwand ermittelt werden.

Wie eine entsprechend konzipierte Auswertungs-Einheit 12 des Füllstandsmessgerätes 1 mittels der erfindungsgemäßen Antennen-Anordnung 11 das Füllstands-Profil L(α, β) ermitteln kann, wird anhand von Fig. 4 näher veranschaulicht: Für das Haupt-Antennenarray und das Sub-Antennenarray werden gemäß des MIMO-Prinzips separat anhand der empfangenen Radar-Signale $R_{HF}$ entsprechende Messkurven $A_{i,j}(d)$, $A_{k,l}(d)$ erstellt. Dabei stellt der Begriff "Messkurve" im Rahmen der Erfindung allgemein die Signalamplitude A (ggf. in dB) des reflektierten Radar-Signals $R_{HF}$ in Abhängigkeit der Entfernung d zum Füllstandsmessgerät 1 wieder. Im Falle des FMCW-Prinzips stellt die jeweilige Messkurve $A_{i,j}(d)$, $A_{k,l}(d)$ die Signalamplitude A spezifisch in Abhängigkeit der Frequenzdifferenz zwischen dem über die jeweilige Sende-Antenne i ausgehendem Radar-Signal $S_{HF}$ und dem an der jeweiligen Empfangs-Antenne j, k eingehendem Radar-Signal $R_{HF}$ dar. Dabei ist die Frequenzdifferenz prinzipbedingt linear zur Entfernung d und repräsentiert diese somit im Falle von FMCW.

Da die Ansteuerung der beiden Antennenarrays mittels des MIMO-Prinzips erfolgt, erstellt die Auswertungs-Einheit 12 jeweils eine Messkurve $A_{i,j}(d)$, $A_{k,l}(d)$ für jede Empfangs-Antenne j des Haupt-Antennenarrays in Kombination mit jeder Sende-Antenne i des Haupt-Antennenarrays, sowie für jede Empfangs-Antenne k des Haupt-Antennenarrays in Kombination mit jeder Sende-Antenne i des Haupt-Antennenarrays. Zwecks Zuordnung der Sende-Antennen i, l steuert die Signalerzeugungs-Einheit 10 die Sende-Antennen i, l hierfür gemäß des TDMA-Verfahrens der (Geraden-) Reihenfolge i, k = 1, 2, ... zeitlich versetzt nacheinander an. In Bezug auf das vereinfachte Sub-Antennenarray der in Fig. 3 dargestellten Antennen-Anordnung 11 ist diese Ansteuerung irrelevant, da das Sub-Antennenarray der Übersichtlichkeit halber lediglich eine einzige Sende-Antenne l umfasst. In Bezug zu der in Fig. 3 gezeigten Antennen-Anordnung 11 bedeutet dies außerdem, dass mittels des Haupt-Antennenarrays 3*4=12 Messkurven $A_{i,j}(d)$ aufgezeichnet werden; Mittels des Sub-Antennenarrays erfasst die Auswertungs-Einheit entsprechend 1*2 +1*1=3 Messkurven $A_{k,l}(d)$.

Im Anschluss erstellt die Auswertungs-Einheit 12 anhand derjenigen Messkurven $A_{i,j}(d)$, die mittels des Haupt-Antennenarrays aufgenommen sind, entsprechende Raumwinkel-Spektren $A_{i,j}(d_x, α, β)$ für definierte Messpunkte $d_x$ des Messbereichs d. Ebenso werden anhand derjenigen Messkurven $A_{k,l}(d)$, die mittels des Sub-Antennenarrays aufgenommen wurden, auf Höhe der jeweils gleichen Messpunkte $d_x$ des Messbereichs d zusätzliche Raumwinkel-Spektren $A_{k,l}(d_x, α, β)$ erstellt. Dabei gibt ein "Raumwinkel-Spektrum" im Rahmen der Erfindung die Signal-Amplitude A bzw. die Signal-Intensität des reflektierten Radar-Signals $R_{HF}$ auf Höhe einer definierten Entfernung $d_x$ zweidimensional in Abhängigkeit der zwei Raumwinkel α, β wieder. Erstellt werden die Raumwinkel-Spektren $A_{i,j}(d_x, α, β)$, $A_{k,i}(d_x, α, β)$ mittels "Digital Beamforming". Hierzu kann innerhalb der Auswertungs-Einheit 12 beispielsweise eine geeignete "Digital Beamforming Processor"-Architektur implementiert sein. Für je mehr Messpunkte $d_x$ Raumwinkel-Spektren $A_{i,j}(d_x, α, β)$, $A_{k,l}(d_x, α, β)$ erstellt werden, bzw. je näher die Messpunkte $d_x$ beieinander liegen, desto höher ist die potenzielle Entfernungs-Genauigkeit des resultierenden Füllstands-Profils L(α, β).

Um das Füllstands-Profil L(α, β) zu erhalten, werden die bezüglich der Messpunkte $d_x$ korrespondierenden Raumwinkel-Spektrum $A_{i,j}(d_x, α, β)$, $A_{k,l}(d_x, α, β)$ des Haupt-Antennenarrays und des Sub-Antennenarrays erfindungsgemäß zunächst zu jeweils einem kon-

jugierten Raumwinkel-Spektrum A(d$_x$,α, β) zusammen-gefasst. Dabei fasst die Auswertungs-Einheit 12 die Raumwinkel-Spektren A$_{i,j}$(d$_x$, α, β), A$_{k,l}$(d$_x$,α, β) je nach Skalierung der Signal-Amplitude A (linear oder logarithmisch) entweder durch Addition oder Multiplikation des Amplituden-Wertes am jeweiligen Raumwinkel α, β zusammen.

In den konjugierten Raumwinkel-Spektren A(d$_x$,α, β) spiegelt sich der erfindungsgemäße Vorteil wider, nämlich der Verwendung eines Haupt- und eines Sub-Antennenarrays: Die Signal-Amplitude A des reflektierten Radar-Signals R$_{HF}$ ist in den konjugierten Raumwinkel-Spektren A(d$_x$, α, β) trotz insgesamt geringer Anzahl an Antennen i, j, k, l bzw. trotz weniger erforderlicher Auswertungs-Kanäle über einen breiten Raumwinkelbereich [α, β] mit hoher Winkeltrennung abbildbar. Somit kann die Auswertungs-Einheit 12 auch das Füllstands-Profil L(a, β) über den entsprechenden Raumwinkelbereich [α, β] mit hoher Winkeltrennung erstellen.

Das Füllstands-Profil L(a, β) kann beispielsweise anhand der resultierenden, konjugierten Raumwinkel-Spektren A(d$_x$,α, β) erstellt werden, indem für jeden Raumwinkel α, β evaluiert wird, an welchem Messpunkt d$_x$ des Messbereichs d bzw. in welchem entsprechendem konjugierten Raumwinkelspektrum A(d$_x$,α, β) die Signal-Amplitude A maximal ist. Dabei kann die Entfernung d$_x$ gemäß

$$d_{x,max}(\alpha,\beta) = h - L(\alpha,\beta)$$

in den entsprechenden Füllstandswert L(a, β) umgerechnet werden, wenn die Einbauhöhe h des Füllstandsmessgerätes 1 in der Auswertungs-Einheit 12 hinterlegt wird. Abschließend kann das Füllstands-Profil (L(α, β) der übergeordneten Einheit 4 übermittelt und/oder auf einem Display des Füllstandsmessgerätes 1, beispielsweise in Form von Höhenlinien, visualisiert werden.

**Bezugszeichenliste**

| | |
|---|---|
| 1 | Füllstandsmessgerät |
| 2 | Füllgut |
| 3 | Behälter |
| 4 | Übergeordnete Einheit |
| 11 | Antennen-Anordnung |
| 110 | Substrat |
| 111 | Erste Gerade |
| 112 | Zweite Gerade |
| 113 | Geraden-Ursprung |
| A | Signal-Amplitude |
| a, a' | Abstand zwischen den Antennen des Hauptantennenarrays |
| A$_{i,j}$(d) | Messkurve |
| A$_{i,j}$(d$_x$,α, β) | Raumwinkelspektrum |
| b | Behälterquerschnitt |
| D | Antennen-Abstand |
| d | Entfernung |
| f | Frequenz des Sendesignals |
| h | Einbauhöhe |
| i | Sende-Antennen des Haupt-Antennenarrays |
| j | Empfangs-Antennen des Haupt-Antennenarrays |
| k | Empfangs-Antennen des Sub-Antennenarrays |
| l | Sende-Antenne des Sub-Antennenarrays |
| L(a, β) | Füllstands-Profil |
| R$_{HF}$ | Reflektiertes Radar-Signal |
| S$_{HF}$ | Radar-Signal |
| s, s' | Versatz |
| α,β | Raumwinkel |
| λ | Wellenlänge des Radar-Signals |

**Patentansprüche**

1. Radar-basiertes Füllstandsmessgerät (1) zur Bestimmung eines Füllstands-Profils (L(a, β)) eines Füllguts (2) über einen definierten Raumwinkelbereich (α; β), folgende Komponenten umfassend:

   - Ein Haupt-Antennenarray, mit

     ◦ zumindest zwei entlang einer ersten Geraden (111) angeordneten Sende-Antennen (i), mittels welcher ein Radar-Signal (S$_{HF}$) mit definierter Wellenlänge (λ) in Richtung des Füllguts (2) aussendbar ist, wobei die Sende-Antennen (i) in einem definierten ersten Abstand (a), der größer als die Hälfte der Wellenlänge (λ) des Radar-Signals (S$_{HF}$) ist, zueinander angeordnet sind,
     ◦ zumindest zwei entlang einer zweiten Geraden (112) angeordnete Empfangs-Antennen (j), mittels welcher das von der Füllgut-Oberfläche reflektierte Radar-Signal (R$_{HF}$) empfangbar ist, wobei die Empfangs-Antennen (j) in einem zweiten definierten Abstand (a'), der größer als die Hälfte der Wellenlänge (λ) des Radar-Signals (S$_{HF}$) ist, zueinander angeordnet sind, und wobei die zweite Gerade (112) derart in einem definierten Winkel zwischen 30° und 150° zur ersten Geraden (111) angeordnet ist, so dass die Sende-Antennen (i) und die Empfangs-Antennen (j) ein Raster (a; a') bilden,

   - ein Sub-Antennenarray mit zumindest zwei Empfangs-Antennen (k), die ausgelegt sind, das Radar-Signal (R$_{HF}$) nach Reflektion an der Füllgut-Oberfläche zu empfangen, wobei die zwei Empfangs-Antennen (k) des Sub-Antennenarrays in Bezug zum Raster ([a; a']) des Haupt-Antennenarrays derart auf einem Zwischenraster ([s, s']) angeordnet sind und dem Sub-Antennenarray zumindest eine Sende-Antenne (i, l) derart zugeordnet ist, so dass mittels des Sub-Antennenarrays in dem definierten Raumwinkelbereich ($\alpha$; $\beta$) jeder Raumwinkel ($\alpha$, $\beta$) eindeutig zuordbar ist,

- eine Signalerzeugungs-Einheit (10), die ausgelegt ist, ein Radar-Signal ($S_{HF}$) mit einer definierten Wellenlänge ($\lambda$) zu erzeugen und in die Sende-Antennen (i, k) des Haupt-Antennenarrays und des Sub-Antennenarrays einzukoppeln,

- eine Auswertungs-Einheit, die ausgelegt ist, um

○ anhand der am Haupt-Antennenarray empfangenen Radar-Signale ($R_{HF}$) gemäß des MIMO-Prinzips - Multiple Input Multiple Output-entsprechende Messkurven ($A_{i,j}(d)$) aufzunehmen,

○ um anhand der am Sub-Antennenarray empfangenen Radar-Signals ($R_{HF}$) gemäß des MIMO-Prinzips entsprechende Messkurven ($A_{k,l}(d)$) aufzunehmen,

○ um anhand der mittels des Haupt-Antennenarrays aufgenommenen Messkurven ($A_{i,j}(d)$) auf Höhe definierter Messpunkte ($d_x$) des Messbereichs (d) Raumwinkel-Spektren ($A_{i,j}(d_x, \alpha, \beta)$) zu erstellen,

○ um anhand der mittels des Sub-Antennenarrays aufgenommenen Messkurven ($A_{k,l}(d)$) auf Höhe der definierten Messpunkte ($d_x$) des Messbereichs (d) Raumwinkel-Spektren ($A_{k,l}(d_x, \alpha, \beta)$) zu erstellen,

○ um die bezüglich der Messpunkte ($d_x$) korrespondierenden Raumwinkel-Spektren ($A_{i,j}(d_x, \alpha, \beta)$, $A_{k,l}(d_x, \alpha, \beta)$) des Haupt-Antennenarrays und des Sub-Antennenarrays zu konjugierten Raumwinkel-Spektren ($A(d_x, \alpha, \beta)$) zusammenzufassen, und

○ um anhand der konjugierten Raumwinkel-Spektren ($A(d_x, \alpha, \beta)$) das Raumwinkel-abhängige Füllstands-Profil ($L(a, \beta)$) zu erstellen.

2. Füllstandsmessgerät nach Anspruch 1, wobei es sich bei der zumindest einen zugeordneten Sende-Antenne (i, l) des Sub-Antennenarrays um eine der Sende-Antennen (i) des Haupt-Antennenarrays handelt, und/oder wobei das Sub-Antennen-Array als zugeordnete Sende-Antenne zumindest eine auf dem Zwischenraster ([s, s']) angeordnete Sende-Antenne (l) umfasst.

3. Radar-basiertes Füllstandsmessgerät (1) zur Bestimmung eines Füllstands-Profils ($L(a, \beta)$) eines

Füllguts (2) über einen definierten Raumwinkelbereich ($\alpha$; $\beta$), folgende Komponenten umfassend:

- Ein Haupt-Antennenarray, mit

○ zumindest zwei entlang einer ersten Geraden (111) angeordneten Sende-Antennen (i), mittels welcher ein Radar-Signal ($S_{HF}$) mit definierter Wellenlänge ($\lambda$) in Richtung des Füllguts (2) aussendbar ist, wobei die Sende-Antennen (i) in einem definierten Abstand (a), der größer als die Hälfte der Wellenlänge ($\lambda$) des Radar-Signals ($S_{HF}$) ist, zueinander angeordnet sind,
○ zumindest zwei entlang einer zweiten Geraden (112) angeordnete Empfangs-Antennen (j), mittels welcher das von der Füllgut-Oberfläche reflektierte Radar-Signal ($R_{HF}$) empfangbar ist, wobei die Empfangs-Antennen () in einem zweiten Abstand (a'), der größer als die Hälfte der Wellenlänge ($\lambda$) des Radar-Signals ($S_{HF}$) ist, zueinander angeordnet sind, und wobei die zweite Gerade (112) derart in einem definierten Winkel zwischen 30° und 150° zur ersten Geraden (111) angeordnet ist, so dass die Sende-Antennen (i) und die Empfangs-Antennen (j) ein Raster (a; a') bilden,

- ein Sub-Antennenarray mit zumindest zwei Sende-Antennen (l), die ausgelegt sind, das Radar-Signal ($R_{HF}$) gen Füllgut (2) auszusenden,
- wobei die zwei Sende-Antennen (l) des Sub-Antennenarrays in Bezug zum Raster ([a; a']) des Haupt-Antennenarrays derart auf einem Zwischenraster ([s, s']) angeordnet sind und dem Sub-Antennenarray zumindest eine Empfangs-Antenne (j, k) derart zugeordnet ist, so dass mittels des Sub-Antennenarrays in dem definierten Raumwinkelbereich ($\alpha$; $\beta$) jeder Raumwinkel ($\alpha$, $\beta$) eindeutig zuordbar ist,
- eine Signalerzeugungs-Einheit (10), die ausgelegt ist, ein Radar-Signal ($S_{HF}$) mit einer definierten Wellenlänge ($\lambda$) zu erzeugen und in die Sende-Antennen (i, k) des Haupt-Antennenarrays und des Sub-Antennenarrays einzukoppeln,
- eine Auswertungs-Einheit, die ausgelegt ist, um

○ anhand der am Haupt-Antennenarray empfangenen Radar-Signale ($R_{HF}$) gemäß des MIMO-Prinzips - Multiple Input Multiple Output-entsprechende Messkurven ($A_{i,j}(d)$) aufzunehmen,
○ um anhand der am Sub-Antennenarray empfangenen Radar-Signals ($R_{HF}$) gemäß des MIMO-Prinzips entsprechende Messkurven ($A_{k,l}$(d)) aufzunehmen,

◦ um anhand der mittels des Haupt-Antennenarrays aufgenommenen Messkurven ($A_{i,j}$(d)) auf Höhe definierter Messpunkte ($d_x$) des Messbereichs (d) Raumwinkel-Spektren ($A_{i,j}(d_x, \alpha, \beta)$) zu erstellen,

◦ um anhand der mittels des Sub-Antennarrays aufgenommenen Messkurven ($A_{k,l}$(d)) auf Höhe der definierten Messpunkte ($d_x$) des Messbereichs (d) Raumwinkel-Spektren ($A_{k,l}(d_x, \alpha, \beta)$) zu erstellen,

◦ um die bezüglich der Messpunkte ($d_x$) korrespondierenden Raumwinkel-Spektren ($A_{i,j}(d_x, \alpha, \beta)$, $A_{k,l}(d_x, \alpha, \beta)$) des Haupt-Antennenarrays und des Sub-Antennenarrays zu konjugierten Raumwinkel-Spektren ($A(d_x, \alpha, \beta)$) zusammenzufassen, und

◦ um anhand der konjugierten Raumwinkel-Spektren ($A(d_x, \alpha, \beta)$) das Raumwinkel-abhängige Füllstands-Profil ($L(a, \beta)$) zu erstellen.

4. Füllstandsmessgerät nach Anspruch 3, wobei es sich bei der zumindest einen zugeordneten Empfangs-Antenne (j, k) des Sub-Antennenarrays um eine der Empfangs-Antennen (j) des Haupt-Antennenarrays handelt, und/oder wobei das Sub-Antennen-Array als zugeordnete Empfangs-Antenne zumindest eine auf dem Zwischenraster ([s, s']) angeordnete Empfangs-Antenne (k) umfasst.

5. Füllstandsmessgerät nach einem der vorhergehenden Ansprüche, wobei die erste Gerade und die zweite Gerade in einem Winkel von 90° zueinander angeordnet sind.

6. Füllstandsmessgerät nach einer der vorhergehenden Ansprüche, wobei der Abstand (a) zwischen den Sende-Antennen (i) und der Abstand (a') zwischen den Empfangs-Antennen (j) im Haupt-Antennenarray der Wellenlänge ($\lambda$) des Radar-Signals ($S_{HF}$) entspricht, und/oder wobei der Versatz (s, s') der Sende- bzw. Empfangs-Antennen (k) im Sub-Antennenarray die Hälfte der Wellenlänge ($\lambda$) des Radar-Signals ($S_{HF}$) entspricht.

7. Füllstandsmessgerät nach einem der vorhergehenden Ansprüche, wobei das Haupt-Antennenarray eine gleiche Anzahl an Sende-Antennen (i) und an Empfangs-Antennen (j) aufweist.

8. Füllstandsmessgerät nach zumindest einem der vorhergehenden Ansprüche, wobei das Sub-Antennenarray im Vergleich zum Haupt-Antennenarray maximal die Hälfte, insbesondere ein Drittel der Sende- bzw. Empfangs-Antennen (k) aufweist.

9. Füllstandsmessgerät nach einem der vorhergehenden Ansprüche, wobei die Signalerzeugungs-Einheit (10) ausgelegt ist, das Radar-Signal ($S_{HF}$) gemäß des FMCW-Verfahrens zu erzeugen, und wobei die Auswertungs-Einheit ausgelegt ist, die Messkurven ($A_{i,j}$(d), $A_{k,l}$(d)) des Haupt-Antennenarrays und des Sub-Antennenarrays gemäß des FMCW-Verfahrens zu erstellen.

10. Füllstandsmessgerät nach Anspruch 9, wobei die Auswertungs-Einheit ausgelegt ist, die Messkurven ($A_{i,j}$(d), $A_{k,l}$(d)) des Haupt-Antennenarrays und des Sub-Antennenarrays mittels einer Fensterfunktion, insbesondere mittels eines Hann-Fensters oder Chebychev-Fensters, zu gewichten.

11. Verfahren zur Radar-basierten Bestimmung eines Füllstands-Profils ($L(a, \beta)$) über einen definierten Raumwinkelbereich ($\alpha$; $\beta$) mittels des Füllstandsmessgerätes (1) nach einem der Ansprüche 9 bis 10, folgende Verfahrensschritte umfassend:

- Aufnahme entsprechender Messkurven ($A_{i,j}$(d)) über einen definierten Füllstands-Messbereich (d) mittels des Haupt-Antennenarrays gemäß des MIMO-Prinzips,
- Erstellung von Raumwinkel-Spektren ($A_{i,j}(d_x, \alpha, \beta)$) auf Höhe definierter Messpunkte ($d_x$) des Messbereichs (d) anhand der mittels des Haupt-Antennenarrays aufgenommenen Messkurven ($A_{i,j}$(d)),
- Aufnahme entsprechender Messkurven ($A_{k,l}$(d)) über einen definierten Füllstands-Messbereich (d) mittels des Sub-Antennenarrays gemäß des MIMO Prinzips - Multiple Input Multiple Output -,
- Erstellung von Raumwinkel-Spektren ($A_{k,l}(d_x, \alpha, \beta)$) auf Höhe der definierten Messpunkte ($d_x$) des Messbereichs (d) anhand der mittels des Sub-Antennenarrays aufgenommenen Messkurven ($A_{k,l}$(d)),
- Zusammenfassen der an den Messpunkten ($d_x$) korrespondierenden Raumwinkel-Spektren ($A_{i,j}(d_x, \alpha, \beta)$, $A_{k,l}(d_x, \alpha, \beta)$) des Haupt-Antennenarrays (i, j) und des Sub-Antennenarrays zu konjugierten Raumwinkel-Spektren ($A(d_x, \alpha, \beta)$), und
- Erstellung des Raumwinkel-abhängigen Füllstands-Profils ($L(a, \beta)$) anhand der konjugierten Raumwinkel-Spektren ($A(d_x, \alpha, \beta)$).

12. Verfahren nach Anspruch 11, wobei die an den Messpunkten ($d_x$) korrespondierenden Raumwinkel-Spektren ($A_{i,j}(d_x, \alpha, \beta)$, $A_{k,l}(d_x, \alpha, \beta)$) des Haupt-Antennenarrays und des Sub-Arrays mittels Addition zusammengefasst werden, sofern die Raumwinkel-Spektren ($A_{i,j}(d_x, \alpha, \beta)$, $A_{k,l}(d_x, \alpha, \beta)$) jeweils logarithmisch skaliert sind, oder wobei die an den Messpunkten ($d_x$) korrespondie-

renden Raumwinkel-Spektren ($A_{i,j}(d_x,\alpha,\beta)$, $A_{k,l}(d_x,\alpha,\beta)$) des Hauptantennenarrays und des Sub-Antennenarrays mittels Multiplikation zusammengefasst werden, sofern die Raumwinkel-Spektren ($A_{i,j}(d_x,\alpha,\beta)$, $A_{k,l}(d_x,\alpha,\beta)$) jeweils linear skaliert sind.

13. Verfahren nach Anspruch 11 oder 12, wobei die Raumwinkel-Spektren ($A_{i,j}(d_x,\alpha,\beta)$) auf Basis einer digitalen Strahlformungs-Methode erstellt werden.

## Claims

1. A radar-based fill level meter (1) for determining a fill level profile ($L(a, \beta)$) of a filling material (2) across a defined solid angle range ($\alpha; \beta$), comprising the following components:

    - A main antenna array, with

        ◦ at least two transmitting antennas (i) arranged along a first straight line (111), which can be used to transmit a radar signal ($S_{HF}$) with a defined wavelength ($\lambda$) in the direction of the filling material (2), wherein the transmitting antennas (i) are arranged relative to each other at a defined first distance (a), which is greater than half the wavelength ($\lambda$) of the radar signal ($S_{HF}$),
        ◦ at least two receiving antennas (j) arranged along a second straight line (112), which can be used to receive the radar signal ($R_{HF}$) reflected by the surface of the filling material, wherein the receiving antennas (j) are arranged relative to each other at a second defined distance (a'), which is greater than half the wavelength ($\lambda$) of the radar signal ($S_{HF}$), and wherein the second straight line (112) is arranged at a defined angle of between 30° and 150° relative to the first straight line (111) in such a way that the transmitting antennas (i) and the receiving antennas (j) form a grid (a; a'),

        - a sub-antenna array with at least two receiving antennas (k), which are configured to receive the radar signal ($R_{HF}$) after reflection at the surface of the filling material, wherein the two receiving antennas (k) of the sub-antenna array are arranged on an intermediate grid ([s, s']) relative to the grid ([a; a']) of the main antenna array, and at least one transmitting antenna (i, I) is assigned to the sub-antenna array in such a way that each solid angle ($\alpha, \beta$) can be clearly assigned using the sub-antenna array in the defined solid angle range ($\alpha, \beta$),
        - a signal generating unit (10), which is configured to generate a radar signal ($S_{HF}$) with a defined wavelength ($\lambda$) and to couple it into the transmitting antennas (i, k) of the main antenna array and the sub-antenna array,
    - an evaluation unit which is configured

        ◦ to record corresponding measurement curves ($A_{i,j}(d)$) using the radar signals ($R_{HF}$) received at the main antenna array according to the MIMO principle - multiple input multiple output,
        ◦ to record corresponding measurement curves ($A_{k,l}(d)$) using the radar signal ($R_{HF}$) received at the sub-antenna array according to the MIMO principle,
        ◦ to create solid angle spectra ($A_{i,j}(d_x, \alpha, \beta)$) at the level of defined measuring points (dx) of the measuring range (d) based on the measurement curves ($A_{i,j}(d)$) recorded using the main antenna array,
        ◦ to create solid angle spectra ($A_{k,l}(d_x, a, \beta)$) at the level of the defined measuring points (dx) of the measuring range (d) based on the measurement curves ($A_{k,l}(d)$) recorded using the sub-antenna array,
        ◦ to combine the solid angle spectra ($A_{i,j}(d_x, a, \beta)$, $A_{k,l}(d_x, a, \beta)$) of the main antenna array and the sub-antenna array corresponding to the measuring points (dx) to form conjugated solid angle spectra ($A(d_x, a, \beta)$), and
        ◦ to create the solid angle-dependent fill level profile ($L(a, \beta)$) based on the conjugated solid angle spectra ($A(d_x, a, \beta)$).

2. The fill level meter as claimed in claim 1, wherein the at least one assigned transmitting antenna (i, I) of the sub-antenna array is one of the transmitting antennas (i) of the main antenna array, and/or wherein the sub-antenna array as the assigned transmitting antenna comprises at least one transmitting antenna (I) arranged on the intermediate grid ([s, s']).

3. A radar-based fill level meter (1) for determining a fill level profile ($L(a, \beta)$) of a filling material (2) across a defined solid angle range ($\alpha; \beta$), comprising the following components:

    - A main antenna array, with

        ◦ at least two transmitting antennas (i) arranged along a first straight line (111), which can be used to transmit a radar signal ($S_{HF}$) with a defined wavelength ($\lambda$) in the direction of the filling material (2), wherein the transmitting antennas (i) are arranged relative to each other at a defined distance (a), which is greater than half the wavelength

($\lambda$) of the radar signal ($S_{HF}$),

○ at least two receiving antennas (j) arranged along a second straight line (112), which can be used to receive the radar signal ($R_{HF}$) reflected by the surface of the filling material, wherein the receiving antennas (j) are arranged relative to each other at a second defined distance (a'), which is greater than half the wavelength ($\lambda$) of the radar signal ($S_{HF}$), and wherein the second straight line (112) is arranged at a defined angle of between 30° and 150° relative to the first straight line (111) in such a way that the transmitting antennas (i) and the receiving antennas (j) form a grid (a; a'),

- a sub-antenna array with at least two transmitting antennas (1), which are configured to transmit the radar signal ($R_{HF}$) in the direction of the filling material (2),
- wherein the two transmitting antennas (1) of the sub-antenna array are arranged on an intermediate grid ([s, s']) relative to the grid ([a; a']) of the main antenna array, and at least one receiving antenna (j, k) is assigned to the sub-antenna array in such a way that each solid angle (a, ß) can be clearly assigned using the sub-antenna array in the defined solid angle range (a; ß),
- a signal generating unit (10), which is configured to generate a radar signal ($S_{HF}$) with a defined wavelength ($\lambda$) and to couple it into the transmitting antennas (i, k) of the main antenna array and the sub-antenna array,
- an evaluation unit which is configured

○ to record corresponding measurement curves ($A_{i,j}(d)$) using the radar signals ($R_{HF}$) received at the main antenna array according to the MIMO principle - multiple input multiple output,
○ to record corresponding measurement curves ($A_{k,l}(d)$) using the radar signal ($R_{HF}$) received at the sub-antenna array according to the MIMO principle,
○ to create solid angle spectra ($A_{i,j}(d_x, a, ß)$) at the level of defined measuring points (dx) of the measuring range (d) based on the measurement curves ($A_{i,j}(d)$) recorded using the main antenna array,
○ to create solid angle spectra ($A_{k,l}(d_x, a, ß)$) at the level of the defined measuring points (dx) of the measuring range (d) based on the measurement curves ($A_{k,1}(d)$) recorded using the sub-antenna array,
○ to combine the solid angle spectra ($A_{i,j}(d_x, a, ß)$, $A_{k,l}(d_x, a, ß)$) of the main antenna array and the sub-antenna array corresponding to the measuring points (dx) to form conjugated solid angle spectra ($A(d_x, a, ß)$), and
○ to create the solid angle-dependent fill level profile ($L(a, ß)$) based on the conjugated solid angle spectra ($A(d_x, a, ß)$).

4. The fill level meter as claimed in claim 3, wherein the at least one assigned receiving antenna (j, k) of the sub-antenna array is one of the receiving antennas (j) of the main antenna array, and/or wherein the sub-antenna array as the assigned receiving antenna comprises at least one receiving antenna (k) arranged on the intermediate grid ([s, s']).

5. The fill level meter as claimed in one of the preceding claims, wherein the first straight line and the second straight line at arranged at an angle of 90° relative to each other.

6. The fill level meter as claimed in one of the preceding claims, wherein the distance (a) between the transmitting antennas (i) and the distance (a') between the receiving antennas (j) in the main antenna array correspond to the wavelength ($\lambda$) of the radar signal ($S_{HF}$), and/or wherein the offset (s, s') of the transmitting or receiving antennas (k) in the sub-antenna array corresponds to half of the wavelength ($\lambda$) of the radar signal ($S_{HF}$).

7. The fill level meter as claimed in one of the preceding claims, wherein the main antenna array has the same number of transmitting antennas (i) and receiving antennas (j).

8. The fill level meter as claimed in at least one of the preceding claims, wherein the sub-antenna array has at most half, in particular a third, of the transmitting or receiving antennas (k) compared to the main antenna array.

9. The fill level meter as claimed in one of the preceding claims, wherein the signal generating unit (10) is configured to generate the radar signal ($S_{HF}$) according to the FMCW method, and wherein the evaluation unit is configured to create the measurement curves ($A_{i,j}(d)$, $A_{k,l}(d)$) of the main antenna array and the sub-antenna array according to the FMCW method.

10. The fill level meter as claimed in claim 9, wherein the evaluation unit is configured to weight the measurement curves ($A_{i,j}(d)$, $A_{k,l}(d)$) of the main antenna array and the sub-antenna array using a window function, in particular using a Hann window or Chebyshev window.

11. A method for radar-based determination of a fill level profile ($L(a, ß)$) across a defined solid angle range (a; ß) using the fill level meter (1) as claimed in one of claims 9 or 10, comprising the following process steps:

- Recording corresponding measurement curves ($A_{i,j}(d)$) across a defined fill level measuring range (d) using the main antenna array according to MIMO principle,
- Creating solid angle spectra ($A_{i,j}(d_x, a, ß)$) at the level of defined measuring points ($d_x$) of the measuring range (d) based on the measurement curves ($A_{i,j}(d)$) recorded using the main antenna array,
- Recording corresponding measurement curves ($A_{k,l}(d)$) across a defined fill level measuring range (d) using the sub-antenna array according to MIMO principle - multiple input multiple output -,
- Creating solid angle spectra ($A_{k,l}(d_x, a, ß)$) at the level of the defined measuring points ($d_x$) of the measuring range (d) based on the measurement curves ($A_{k,l}(d)$) recorded using the sub-antenna array,
- Combining the solid angle spectra ($A_{i,j}(d_x, a, ß)$, $A_{k,l}(d_x, a, ß)$) of the main antenna array (i, j) and the sub-antenna array corresponding to the measuring points ($d_x$) to form conjugated solid angle spectra ($A(d_x, a, ß)$), and
- Creating the solid angle-dependent fill level profile ($L(a, ß)$) based on the conjugated solid angle spectra ($A(d_x, a, ß)$).

12. The method as claimed in claim 11, wherein the solid angle spectra ($A_{i,j}(d_x, a, ß)$, $A_{k,l}(d_x, a, ß)$) of the main antenna array and the sub-antenna array corresponding to the measuring points (dx) are combined through addition provided that each solid angle spectrum (($A_{i,j}(d_x, a, ß)$, $A_{k,l}(d_x, a, ß)$) is scaled logarithmically, or wherein the solid angle spectra ($A_{i,j}(d_x, a, ß)$, $A_{k,l}(d_x, a, ß)$) of the main antenna array and the sub-antenna array corresponding to the measuring points ($d_x$) are combined through multiplication provided that each solid angle spectrum ($A_{i,j}(d_x, a, ß)$, $A_{k,l}(d_x, a, ß)$) is scaled linearly.

13. The method as claimed in claim 11 or 12, wherein the solid angle spectra ($A_{i,j}(d_x, a, ß)$) are created based on a digital beamforming method.

## Revendications

1. Transmetteur de niveau basé sur un radar (1) destiné à la détermination d'un profil de niveau ($L(a, ß)$) d'un produit (2) sur une gamme d'angles solides définie ($\alpha$; $ß$), lequel transmetteur comprend les composants suivants :

- un réseau d'antennes principal, avec

  ◦ au moins deux antennes d'émission (i) disposées le long d'une première droite (111), antennes au moyen desquelles un signal radar ($S_{HF}$) de longueur d'onde définie ($\lambda$) peut être émis en direction du produit (2), les antennes d'émission (i) étant disposées à une distance définie (a) l'une de l'autre, laquelle distance est supérieure à la moitié de la longueur d'onde ($\lambda$) du signal radar ($S_{HF}$),
  ◦ au moins deux antennes de réception (j) disposées le long d'une deuxième droite (112), antennes au moyen desquelles le signal radar ($R_{HF}$) réfléchi par la surface du produit peut être reçu, les antennes de réception (j) étant disposées à une deuxième distance (a') l'une de l'autre, laquelle distance est supérieure à la moitié de la longueur d'onde ($\lambda$) du signal radar ($S_{HF}$), et la deuxième droite (112) étant disposée à un angle défini entre 30° et 150° par rapport à la première droite (111) de telle sorte que les antennes d'émission (i) et les antennes de réception (j) forment un quadrillage (a ; a'),

- un sous-réseau d'antennes avec au moins deux antennes d'émission (k), lesquelles sont conçues pour recevoir le signal radar ($R_{HF}$) après réflexion à la surface du produit, les deux antennes de réception (k) du sous-réseau d'antennes étant disposées - par rapport au quadrillage ([a ; a']) du réseau d'antennes principal - sur un quadrillage intermédiaire ([s, s']), et au moins une antenne d'émission (i, l) étant associée au sous-réseau d'antennes, de telle sorte que chaque angle solide ($\alpha$, $\beta$) peut être attribué de manière univoque au moyen du sous-réseau d'antennes dans la gamme d'angles solides définie ($\alpha$; $ß$),

- une unité de génération de signaux (10), laquelle est conçue pour générer un signal radar ($S_{HF}$) de longueur d'onde définie ($\lambda$) et pour coupler ledit signal dans les antennes d'émission (i, k) du réseau d'antennes principal et du sous-réseau d'antennes,

- une unité d'évaluation, laquelle est conçue pour

  ◦ enregistrer les courbes de mesure ($A_{i,j}(d)$) correspondantes à l'aide des signaux radar ($R_{HF}$) reçus sur le réseau d'antennes principal selon le principe MIMO (Multiple Input Multiple Output),
  ◦ enregistrer des courbes de mesure ($A_{k,l}(d)$) correspondantes à l'aide des signaux radar ($R_{HF}$) reçus par le sous-réseau d'antennes selon le principe MIMO,

○ créer des spectres d'angle solide ($A_{i,j}(d_x, \alpha, ß)$) à l'aide des courbes de mesure ($A_{i,j}(d)$) enregistrées au moyen du réseau d'antennes principal à la hauteur des points de mesure définis ($d_x$) de la gamme de mesure ($d$),

○ créer des spectres d'angle solide ($A_{k,l}(d_x, \alpha, ß)$) à l'aide des courbes de mesure ($A_{k,l}(d)$) enregistrées au moyen du sous-réseau d'antennes à la hauteur des points de mesure définis ($d_x$) de la gamme de mesure ($d$),

○ regrouper les spectres d'angle solide ($A_{i,j}(d_x, \alpha, ß)$), ($A_{k,l}(d_x, \alpha, ß)$) du réseau d'antennes principal et du sous-réseau d'antennes correspondant aux points de mesure ($d_x$) en spectres d'angle solide conjugués ($A(d_x, \alpha, ß)$), et

○ créer, à l'aide des spectres d'angle solide conjugués ($A(d_x, \alpha, ß)$), le profil de niveau dépendant de l'angle solide ($L(a, ß)$).

2.  Transmetteur de niveau selon la revendication 1,

    pour lequel l'au moins une antenne d'émission associée (i, l) du sous-réseau d'antennes est l'une des antennes d'émission (i) du réseau d'antennes principal,
    et/ou
    pour lequel le sous-réseau d'antennes comprend comme antenne d'émission associée au moins une antenne d'émission (l) disposée sur le quadrillage intermédiaire ([s, s']).

3.  Transmetteur de niveau basé sur un radar (1) destiné à la détermination d'un profil de niveau ($L(a, ß)$) d'un produit (2) sur une gamme d'angles solides définie ($\alpha; ß$), lequel transmetteur comprend les composants suivants :

    - un réseau d'antennes principal, avec

        ○ au moins deux antennes d'émission (i) disposées le long d'une première droite (111), antennes au moyen desquelles un signal radar ($S_{HF}$) de longueur d'onde définie ($\lambda$) peut être émis en direction du produit (2), les antennes d'émission (i) étant disposées à une distance définie (a) l'une de l'autre, laquelle distance est supérieure à la moitié de la longueur d'onde ($\lambda$) du signal radar ($S_{HF}$),
        ○ au moins deux antennes de réception (j) disposées le long d'une deuxième droite (112), antennes au moyen desquelles le signal radar ($R_{HF}$) réfléchi par la surface du produit peut être reçu, les antennes de réception (j) étant disposées à une deuxième distance (a') l'une de l'autre, laquelle distance est supérieure à la moitié de la longueur d'onde ($\lambda$) du signal radar ($S_{HF}$), et la deuxième droite (112) étant disposée à un angle défini entre 30° et 150° par rapport à la première droite (111) de telle sorte que les antennes d'émission (i) et les antennes de réception (j) forment un quadrillage (a ; a'),

- un sous-réseau d'antennes avec au moins deux antennes d'émission (l), lesquelles sont conçues pour émettre le signal radar ($R_{HF}$) en direction du produit (2),
- les deux antennes d'émission (l) du sous-réseau d'antennes étant disposées - par rapport au quadrillage ([a ; a']) du réseau d'antennes principal - sur un quadrillage intermédiaire ([s, s']), et au moins une antenne de réception (j, k) étant associée au sous-réseau d'antennes, de telle sorte que chaque angle solide ($\alpha$, ß) peut être attribué de manière univoque au moyen du sous-réseau d'antennes dans la gamme d'angles solides définie ($\alpha; ß$),
- une unité de génération de signaux (10), laquelle est conçue pour générer un signal radar ($S_{HF}$) de longueur d'onde définie ($\lambda$) et pour coupler ledit signal dans les antennes d'émission (i, k) du réseau d'antennes principal et du sous-réseau d'antennes,
- une unité d'évaluation, laquelle est conçue pour

    ○ enregistrer les courbes de mesure ($A_{i,j}(d)$) correspondantes à l'aide des signaux radar ($R_{HF}$) reçus sur le réseau d'antennes principal selon le principe MIMO (Multiple Input Multiple Output),
    ○ enregistrer des courbes de mesure ($A_{k,l}(d)$) correspondantes à l'aide des signaux radar ($R_{HF}$) reçus par le sous-réseau d'antennes selon le principe MIMO,
    ○ créer des spectres d'angle solide ($A_{i,j}(d_x, \alpha, ß)$) à l'aide des courbes de mesure ($A_{i,j}(d)$) enregistrées au moyen du réseau d'antennes principal à la hauteur des points de mesure définis ($d_x$) de la gamme de mesure ($d$),
    ○ créer des spectres d'angle solide ($A_{k,l}(d_x, \alpha, ß)$) à l'aide des courbes de mesure ($A_{k,l}(d)$) enregistrées au moyen du sous-réseau d'antennes à la hauteur des points de mesure définis ($d_x$) de la gamme de mesure ($d$),
    ○ regrouper les spectres d'angle solide ($A_{i,j}(d_x, \alpha, ß)$), ($A_{k,l}(d_x, \alpha, ß)$) du réseau d'antennes principal et du sous-réseau d'antennes correspondant aux points de mesure $(d_x)$ en spectres d'angle solide conjugués $(A(d_x, \alpha, ß))$, et

  ◦ créer, à l'aide des spectres d'angle solide conjugués $(A(d_x, \alpha, ß))$, le profil de niveau dépendant de l'angle solide $(L(a, ß))$.

4. Transmetteur de niveau selon la revendication 3,

  pour lequel l'au moins une antenne de réception associée $(j, k)$ du sous-réseau d'antennes est l'une des antennes de réception $(j)$ du réseau d'antennes principal, et/ou

  pour lequel le sous-réseau d'antennes comprend comme antenne de réception associée au moins une antenne de réception $(k)$ disposée sur le quadrillage intermédiaire $([s, s'])$.

5. Transmetteur de niveau selon l'une des revendications précédentes, pour lequel la première droite et la deuxième droite sont disposées selon un angle de 90° l'une par rapport à l'autre.

6. Transmetteur de niveau selon l'une des revendications précédentes,
  pour lequel la distance $(a)$ entre les antennes d'émission $(i)$ et la distance $(a')$ entre les antennes de réception $(j)$ dans le réseau d'antennes principal correspond à la longueur d'onde $(\lambda)$ du signal radar $(S_{HF})$, et/ou pour lequel le décalage $(s, s')$ des antennes d'émission et de réception $(k)$ dans le sous-réseau d'antennes correspond à la moitié de la longueur d'onde $(\lambda)$ du signal radar $(S_{HF})$.

7. Transmetteur de niveau selon l'une des revendications précédentes, pour lequel le réseau d'antennes principal comprend un nombre égal d'antennes d'émission $(i)$ et d'antennes de réception $(j)$.

8. Transmetteur de niveau selon au moins l'une des revendications précédentes, pour lequel le sous-réseau d'antennes présente au maximum la moitié, notamment un tiers, des antennes d'émission ou de réception $(k)$ par rapport au réseau d'antennes principal.

9. Transmetteur de niveau selon l'une des revendications précédentes,

  pour lequel l'unité de génération de signal (10) est conçue pour générer le signal radar $(S_{HF})$ selon le procédé FMCW, et
  pour lequel l'unité d'évaluation est conçue pour créer les courbes de mesure $(A_{i,j}(d))$, $(A_{k,l}(d))$ du réseau d'antennes principal et du sous-réseau d'antennes selon le procédé FMCW.

10. Transmetteur de niveau selon la revendication 9, pour lequel l'unité d'évaluation est conçue pour pondérer les courbes de mesure $(A_{i,j}(d))$, $(A_{k,l}(d))$ du réseau d'antennes principal et du sous-réseau d'antennes au moyen d'une fonction de fenêtre, notamment au moyen d'une fenêtre de Hann ou d'une fenêtre de Chebychev.

11. Procédé destiné à la détermination basée sur un radar d'un profil de niveau $(L(a, ß))$ sur une gamme d'angles solides définie $(\alpha; ß)$ au moyen du transmetteur de niveau (1) selon l'une des revendications 9 à 10, lequel procédé comprend les étapes suivantes :

  - Enregistrement de courbes de mesure $(A_{i,j}(d))$ correspondantes sur une gamme de mesure de niveau définie $(d)$ au moyen du réseau d'antennes principal selon le principe MIMO,
  - Création de spectres d'angle solide $(A_{i,j}(d_x, \alpha, ß))$ à la hauteur de points de mesure définis $(d_x)$ de la gamme de mesure $(d)$ à l'aide des courbes de mesure enregistrées $(A_{i,j}(d))$ au moyen du réseau d'antennes principal,
  - Enregistrement de courbes de mesure $(A_{k,l}(d))$ correspondantes sur une gamme de mesure de niveau définie $(d)$ au moyen du sous-réseau d'antennes selon le principe MIMO Multiple Input Multiple Output,
  - Création de spectres d'angle solide $(A_{k,l}(d_x, \alpha, ß))$ à la hauteur des points de mesure définis $(d_x)$ de la gamme de mesure $(d)$ à l'aide des courbes de mesure $(A_{k,l}(d))$ enregistrées au moyen du sous-réseau d'antennes,
  - Regroupement des spectres d'angle solide $(A_{i,j}(d_x, \alpha, ß))$, $(A_{k,l}(d_x, \alpha, ß))$ du réseau d'antennes principal $(i, j)$ et du sous-réseau d'antennes correspondant aux points de mesure $(d_x)$ en spectres d'angle solide conjugués $(A(d_x, \alpha, ß))$, et
  - Création du profil de niveau $(L(\alpha, ß))$ dépendant de l'angle solide à l'aide des spectres d'angle solide conjugués $(A(d_x, \alpha, ß))$.

12. Procédé selon la revendication 11,

  pour lequel les spectres d'angle solide $(A_{i,j}(d_x, \alpha, ß))$, $(A_{k,l}(d_x, \alpha, ß))$ du réseau d'antennes principal et du sous-réseau d'antennes correspondant aux points de mesure $(d_x)$ sont réunis au moyen d'une addition, dans la mesure où les spectres d'angle solide $(A_{i,j}(d_x, \alpha, ß))$, $(A_{k,l}(d_x, \alpha, ß))$ sont respectivement mis à l'échelle de manière logarithmique, ou
  pour lequel les spectres d'angle solide $(A_{i,j}(d_x, \alpha, ß))$, $(A_{k,l}(d_x, \alpha, ß))$ du réseau d'antennes principal et du sous-réseau d'antennes correspondant aux points de mesure $(d_x)$ sont réunis au

moyen d'une multiplication, dans la mesure où les spectres d'angle solide $(A_{i,j}(d_x, \alpha, \beta))$, $(A_{k,l}(d_x, \alpha, \beta))$ sont respectivement mis à l'échelle de manière linéaire.

13. Procédé selon la revendication 11 ou 12, pour lequel les spectres d'angle solide $(A_{i,j}(d_x, \alpha, \beta))$ sont créés sur la base d'une méthode numérique de formation de faisceau.

Fig. 1

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013108490 A1
- EP 3309899 A1
- DE 102018207686 A1